# EUROPÄISCHE PATENTSCHRIFT

(11) **EP 1 537 541 B1**
(45) Veröffentlichungstag und Bekanntmachung des Hinweises auf die Patenterteilung: **03.01.2007**
(21) Anmeldenummer: 03794684.5
(22) Anmeldetag: 09.09.2003
(51) Int. Cl.: G07B 15/00, G01C 21/00

(54) **VERFAHREN ZUR IDENTIFIKATION EINES MAUTPFLICHTIGEN STRASSENABSCHNITTES**
METHOD FOR IDENTIFYING A TOLL-REQUIRED SECTION OF ROAD
PROCEDE PERMETTANT D'IDENTIFIER UN TRON ON DE ROUTE SOUMIS A PEAGE

(30) Priorität: 12.09.2002 AT 13722002
(43) Veröffentlichungstag der Anmeldung: 08.06.2005
(73) Patentinhaber: Siemens AG Österreich, 1210 Wien (AT)
(72) Erfinder: HARTINGER, Horst, 8330 Feldbach (AT)
(74) Vertreter: Patentanwaltskanzlei Matschnig
(86) Internationale Anmeldenummer: PCT/AT2003/000267
(87) Internationale Veröffentlichungsnummer: WO 2004/025574

(56) Entgegenhaltungen:
- EP-A- 1 006 340
- WO-A-95/14908
- DE-A- 3 718 996

## Beschreibung

Die Erfindung betrifft ein Verfahren zum Feststellen ob zumindest ein mautpflichtiger Straßenabschnitt durch zumindest ein Fahrzeug befahren wird mittels eines Positionsbestimmungssystems, welches dazu eingerichtet ist, die aktuelle Position des zumindest einen Fahrzeuges zu erfassen, wobei Positionen des zumindest einen Fahrzeuges mit der Position von zumindest einem für eine Auffahrt auf einen mautpflichtigen Straßenabschnitt charakteristischen Referenzpunkt verglichen werden.

Weiters betrifft die Erfindung ein Mautsystem mit einem Positionsermittlungssystem, welches dazu eingerichtet ist, die momentane Position eines Fahrzeuges zu ermitteln, wobei das Fahrzeug eine Steuerung aufweist, die dazu eingerichtet ist, Positionen des Fahrzeuge mit der Position von für den zumindest einen mautpflichtigen Straßenabschnitt charakteristischen Referenzpunkten zu vergleichen.

Ein Mautsystem bzw. ein Verfahren der oben genannten Art sind aus der DE 43 44 433 A1 bekannt geworden. Bei dem bekannten Verfahren werden aktuelle Orts-Koordinaten von einem GPS-Empfänger erfasst und mit den in einer elektronischen Vignette intern gespeicherten Einfahrt/Ausfahrtkoordinaten einer Autobahnstrecke verglichen und bei einer Übereinstimmung der Koordinaten diese mittels des digitalen mobilen Netzwerkes an ein fahrzeugexternes Abrechnungszentrum übertragen, wobei im Abrechnungszentrum aus den übertragenen Daten die zurückgelegten Autobahnkilometer sowie die damit verbundenen Autobahngebühren berechnet werden.

Ein weiteres Mautsystem bzw. Verfahren der eingangs genannten Art ist aus der WO 95/14908 A bekannt geworden. Dieses Dokument offenbart die Feststellung eines Fahrzeuges in eine Teilstrecke eines mautpflichtigen Straßennetzes. Hierbei werden absolute Koordinaten bestimmter charakteristischer Punkte für Verzweigungen des Straßennetzes gespeichert und zur Berechnung, ob das Fahrzeug in einen gebührenpflichtigen Abschnitt eingefahren ist, verwendet. Ein Einfahren in das gebührenpflichtige Streckennetz wird angenommen, wenn der berechnete Abstand zwischen der aktuellen, mittels Satellitennavigation ermittelten Fahrzeugposition und dem nächstliegenden ermittelten Identifikationspunkt unterhalb eines vorgebbaren Minimalabstandes liegt.

Die EP 0 646 264 B1 zeigt ein Verfahren zur Feststellung, ob ein Fahrzeug einer vorgegebenen Route folgt. Hierbei wird eine Anzahl möglicher Fahrzeugpositionen mit einer empirisch bestimmten Fahrzeugposition verglichen. Danach wird überprüft, ob die möglichen Fahrzeugpositionen gültige Möglichkeiten in Bezug auf einen Abstand von einer im Voraus bekannten Fahrzeugposition sind. Hierauf wird eine Orientierung des Fahrzeuges ermittelt und ohne Bezugnahme auf die vorgegebene Route mit den gültigen Möglichkeiten verglichen und jene Positionsmöglichkeiten, die mit der geringsten Wahrscheinlichkeit mit der gemessenen Fahrzeugrichtung übereinstimmen entfernt. Aus den verbleibenden Positionsmöglichkeiten, werden diejenigen ausgewählt, die alle auf der vorgegebenen Route liegen. Aus diesen herausgefilterten Positionsmöglichkeiten wird eine herausgenommen und anhand der momentanen Position des Fahrzeuges überprüft, ob die momentane Position der vorgegebenen Route entspricht.

Die WO 95/20801 offenbart ein Verfahren und eine Anordnung zur Ermittlung von Nutzungsgebühren für Verkehrswege und/oder Verkehrsflächen, bei welchem die Positionsdaten des Fahrzeuges mittels eines Positionsermittlungssystems erfasst werden und mit den Positionen von virtuellen Mautstellen verglichen werden. Die Positionsdaten können zur Berechnung der Mautgebühren an eine fahrzeugexterne Zentralstelle übermittelt werden, wobei auch eine Berechnung der Gebühren in einer Bemautungsvorrichtung des Fahrzeuges erfolgen kann und die ermittelten Gebühren an die Zentralstelle übermittelt werden, wo sie dann von einem Konto abgebucht werden können. Nachteilig an diesem Verfahren ist vor allem, dass ständig die Position des Fahrzeuges erfasst werden muss und keine Möglichkeit einer anonymen Abbuchung besteht.

Die WO 99/33027 beschreibt ein Verfahren zur Einhebung von Mautgebühren, bei welchem die aktuelle Position des Fahrzeuges zur Berechnung von Mautgebühren mit der Position eines virtuellen Mautstelle verglichen wird, wobei bei Durchfahrt eines Fahrzeuges durch eine physische Mautstation, eine Kommunikationsverbindung zwischen dem Fahrzeug und einer zentralen Mautleitsstelle aufgebaut wird, um die angefallenen Mautgebühren zu begleichen. Nach erfolgter Bezahlungstransaktion wird zwischen der Mautstation und dem Fahrzeug eine Kommunikationsverbindung aufgebaut, über die ein Nachweis der ordnungsgemäßen Bezahlung übermittelt wird.

Nachteilig an den bekannten Verfahren ist, dass mit ihnen nur mit relativ geringer Genauigkeit angegeben werden kann, ob ein Auffahren auf einen mautpflichtigen Straßenabschnitt vorliegt, da lediglich das Durchfahren eines Punktes registriert wird.

Es ist daher eine Aufgabe der Erfindung, den oben genannten Nachteil des Stands der Technik zu überwinden.

Diese Aufgabe wird mit einem Verfahren der eingangs genannten Art erfindungsgemäß dadurch gelöst, dass innerhalb eines vorgebbaren Bereichs um die Auffahrt die Orientierung des Fahrzeuges ermittelt wird, wobei festgestellt wird, ob die erhaltene Orientierung in einem vorgebbaren Toleranzbereich mit einer für das Auffahren auf den mautpflichtigen Straßenabschnitt charakteristischen Orientierung übereinstimmt, wobei vor Ermittlung der Orientierung des Fahrzeuges überprüft wird, ob die Entfernung des Fahrzeugs zu der Auffahrt eine vorgebbare Distanz unterschreitet, wobei nach Unterschreiten der Distanz überprüft wird, ob sich das Fahrzeug in dem Bereich um die Auffahrt befindet, in welchem die Orientierungsermittlung erfolgt.

Die erfindungsgemäße Lösung ermöglicht es, aufgrund der Ermittlung der Orientierung und somit der Fahrtrichtung eines Fahrzeuges im Bereich einer Auffahrt auf einen mautpflichtigen Straßenabschnitt mit sehr hoher Genauigkeit die Benutzungswahrscheinlichkeit dieses Straßenabschnittes anzugeben.

Gemäß einer vorteilhaften Ausführungsform der Erfindung wird bei Übereinstimmung der ermittelten Orientierung des Fahrzeugs in dem Bereich um die Auffahrt mit der für die Auffahrt charakteristischen Orientierung innerhalb der Toleranzgrenzen überprüft, ob das Fahrzeug zumindest einen auf der mautpflichtigen Strecke gelegenen Kontrollpunkt passiert.

Günstigerweise werden die von dem Positionsermittlungssystem ermittelten Positionsdaten mit Georeferenzdaten einer elektronischen Landkarte verglichen um die Position des Fahrzeuges in Bezug auf die zumindest eine Auffahrt und die Orientierung des Fahrzeuges in dem Bereich zu ermitteln.

Zur Durchführung des erfindungsgemäßen Verfahrens eignet sich insbesondere ein Mautsystem der eingangs genannten Art, welches dazu eingerichtet ist, innerhalb eines vorgebbaren Bereichs um zumindest eine Auffahrt auf einen mautpflichtigen Straßenabschnitt die Orientierung des Fahrzeuges zu ermitteln, wobei es weiters dazu eingerichtet ist, zu kontrollieren, ob die ermittelte Orientierung in einem vorgebbaren Toleranzbereich mit einer für die Auffahrt charakteristischen Orientierung übereinstimmt, wobei das Mautsystem dazu eingerichtet ist, bevor das Fahrzeug in den Bereich um die Auffahrt einfährt zu überprüfen, ob die Entfernung des Fahrzeuges zu der Auffahrt eine vorgebbare Distanz unterschreitet, wobei das Mautsystem weiters dazu eingerichtet ist, nach Unterschreiten der Distanz zu überprüfen, ob sich das Fahrzeug in dem Bereich um die Auffahrt befindet.

Darüber hinaus kann das Mautsystem dazu eingerichtet sein, bei Übereinstimmung der ermittelten Orientierung des Fahrzeuges in dem Bereich um die Auffahrt mit der für die Auffahrt charakteristischen Orientierung innerhalb der Toleranzgrenzen zu überprüfen, ob das Fahrzeug zumindest einen auf der mautpflichtigen Strecke gelegenen Kontrollpunkt passiert.

Vorteilhafterweise kann das Mautsystem dazu eingerichtet sein, die von dem Positionsermittlungssystem ermittelten Positionsdaten mit Georeferenzdaten einer elektronischen Landkarte zu vergleichen, um die Position des Fahrzeuges in Bezug auf die zumindest eine Auffahrt und die Orientierung des Fahrzeuges in dem Bereich zu ermitteln.

Die Erfindung samt weiteren Ausführungsbeispielen wird im Folgenden anhand einiger nicht einschränkender Ausführungsbeispiele näher erläutert, welche in der Zeichnung dargestellt sind. In dieser zeigen schematisch:
Fig. 1 ein erfindungsgemäßes Mautsystem und
Fig. 2 einen Ablauf des erfindungsgemäßen Verfahrens.

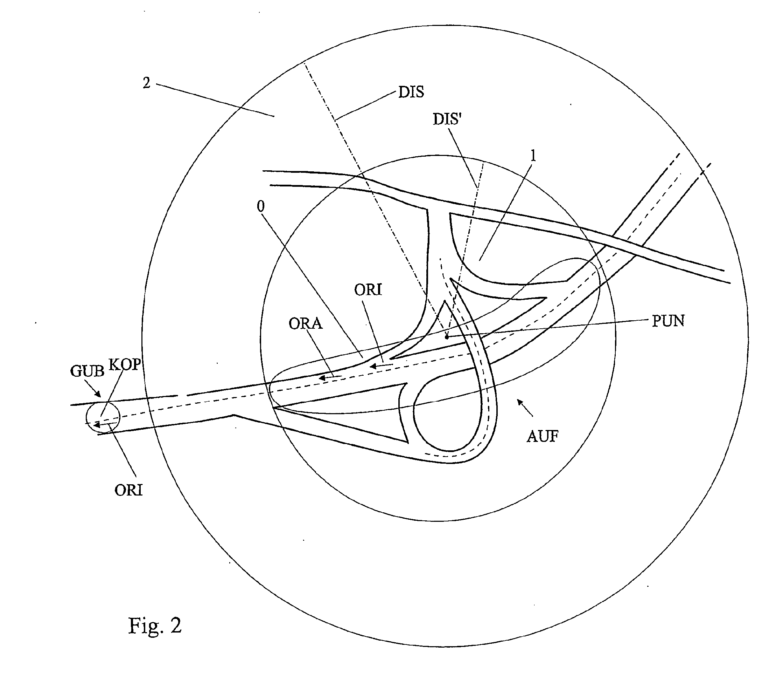

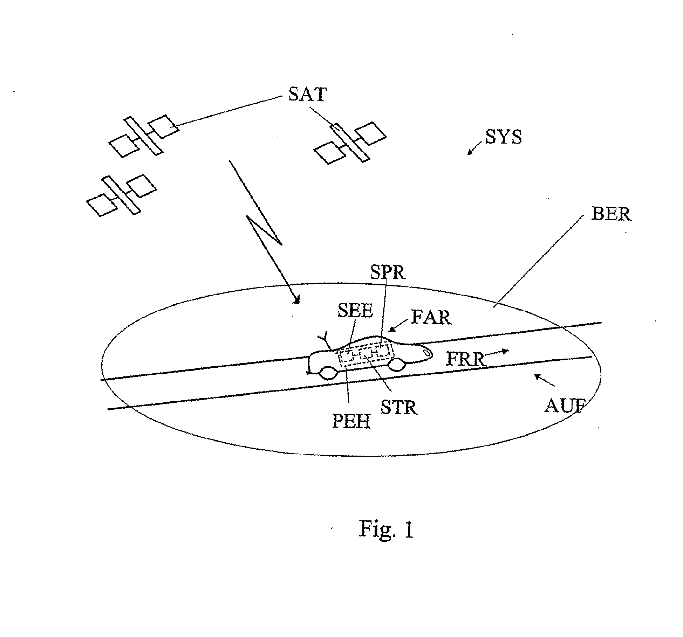

Gemäß Fig. 1 weist ein erfindungsgemäßes Mautsystem SYS ein Positionsermittlungssystem POS, beispielsweise das an sich bekannte Global Positioning System kurz GPS auf. Da es sich bei GPS um ein dem Fachmann hinlänglich bekanntes System handelt, wird an dieser Stelle auf eine detaillierte Darstellung und Erläuterung dieses Systems verzichtet.

Im Fall des GPS-Systems kann an Bord eines Fahrzeuges FAR ein entsprechendes GPS-Modul zur Ermittlung von Positionsdaten vorgesehen sein. Die Erfindung ist jedoch nicht auf das GPS eingeschränkt. Prinzipiell lassen sich das erfindungsgemäße Verfahren und das erfindungsgemäße Verkehrsüberwachungssystem SYS auch mit anderen bekannten Positionsermittlungssystemen realisieren. Für topografisch schwierige Streckenabschnitte eignen sich beispielsweise auch Trägheitsnavigationssysteme. Auch Trägheitsnavigationssysteme sind in großer Zahl bekannt geworden. So beschreibt etwa die EP 1 096 230 ein Trägheitsnavigationssystem für Fahrzeuge, welches gemeinsam mit einem GPS-System oder in Verbindung mit einem anderen Navigationssystem dazu verwendet werden kann, die Position eines Fahrzeuges zu bestimmen. Ebenso ist das erfindungsgemäße Verfahren auf andere Satelliten- und terrestrische Ortungssysteme übertragbar.

Neben der momentanen Position kann auch die Fahrtrichtung FRR des Fahrzeuges FAR von dem Positionsermittlungssystem POS auf an sich bekannte Art ermittelt werden. So kann anhand der zeitlichen Positionsveränderung des Fahrzeuges FAR die momentane Orientierung ORI des Fahrzeuges FAR, d. h. dessen Fahrtrichtung, eindeutig bestimmen werden.

Die Berechung der momentanen Position bzw. der Orientierung ORI des Fahrzeuges FAR anhand der Positionsdaten kann in einer Steuerung STR, beispielsweise einem entsprechend programmierten Mikroprozessor, einer an Bord des Fahrzeuges FAR angeordneten Positionsermittlungseinheit PEH erfolgen. Die Steuerung STR kann zu diesem Zweck dazu eingerichtet sein, von Sendestationen, beispielsweise Satelliten, des Positionsermittlungssystems über eine Kommunikationseinheit SEE Referenzsignale zu empfangen und daraus die aktuellen Positionsdaten zu errechnen. Im Falle des GPS-Systems wird die Orientierungsinformation gemeinsam mit den Positionsdaten in der Positionsermittlungseinheit PEH gewonnen und verfügbar gemacht. Dieser Fall wird im folgenden ohne Beschränkung der Allgemeinheit vorausgesetzt.

Die Steuerung STR verknüpft die Informationen der aktuellen Positionsdaten des Positionsermittlungssystems mit in einer Speichereinheit SPR abgelegten Georeferenzdaten, welche auch die Koordinaten der Auffahrten AUF auf mautpflichtige Straßenabschnitte enthalten. Jedem mautpflichtigen Abschnitt kann hierbei eine Abschnittsidentifikation zugeordnet sein. Weiters sind jeder Auffahrt AUF in den Georeferenzdaten charakteristische Orientierungen ORA d. h. Fahrtrichtungen zugeordnet, welche bekannterweise als Winkel parametrisierbar sind. Die Georeferenzdaten können beispielsweise einer handelsüblichen elektronischen Karte, wie der Austrian Map 2.0 des Österreichischen Bundesamts für Eich und Vermessungswesens, entnommen werden, bzw. selbst in Form einer elektronischen Karte in einer Speichereinheit SPR abgelegt sein.

Erfindungsgemäß werden aktuelle Positionen des Fahrzeuges FAR mit den Positionen von für eine Auffahrt AUF auf einen mautpflichtigen Straßenabschnitt charakteristischen Referenzpunkten verglichen. Liegt die aktuelle Position des Fahrzeuges FAR innerhalb eines vorgebbaren Bereichs BER um die Auffahrt AUF wird die Orientierung ORI, d. h. die Fahrtrichtung des Fahrzeuges ermittelt, wobei überprüft wird, ob die ermittelte Orientierung ORI in einem vorgebbaren Toleranzbereich mit einer für das Auffahren auf den mautpflichtigen Straßenabschnitt charakteristischen Orientierung ORA übereinstimmt. Als Ergebnis der Überprüfung liefert die Steuerung STR entweder die Abschnittsidentifikation eines zu bezahlenden Mautabschnitts oder einen entsprechenden Wert für keinen identifizierten Abschnitt.

Gemäß Fig. 2 kann die Identifizierung der Benutzung einer Auffahrt AUF stufenweise erfolgen. Hierzu können gemäß einer vorteilhaften Variante der Erfindung drei Gültigkeitsbereiche 2, 1, 0, für die Identifizierung einer Auffahrt AUF definiert werden, welche sequentiell aktiviert bzw. durchlaufen werden.

Der Gültigkeitsbereich 2 kann hierbei aktiviert werden, wenn eine vorgebbare Distanz DIS zu einem der Auffahrt AUF zugeordneten Referenzpunkt PUN, dessen Koordinaten in einer mit der Steuerung STR verbundenen Speichereinheit SPE für die Georeferenzdaten abgelegt sein können, unterschritten wird. Zur Überprüfung, ob sich ein Fahrzeug FAR im Gültigkeitsbereich 2 einer Auffahrt AUF befindet, können die Distanzen der aktuellen GPS Position zu allen in den Georeferenzdaten definierten Auffahrten AUF berechnet werden.

Der Gültigkeitsbereich 1 wird aktiviert, falls der Gültigkeitsbereich 2 bereits aktiviert ist und eine dem Gültigkeitsbereich 1 zugeordnete Distanz DIS' zu der Auffahrt AUF von dem Fahrzeug FAR unterschritten wird.

Der Gültigkeitsbereich 0 wird erst aktiviert, wenn die Gültigkeitsbereiche 2 und 1 bereits aktiviert sind und die Differenz der aktuellen Orientierung ORI des Fahrzeugs FAR und der in den Georeferenzdaten abgelegten Orientierung ORA der Auffahrt AUF einen vorgebbaren Wert, beispielsweise 15°, unterschreitet.

Ist der Gültigkeitsbereich 0 der Auffahrt AUF aktiviert, so können ein oder mehrere Kontrollpunkte KOP des dazugehörigen mautpflichtigen Straßenabschnittes aktiviert werden, d. h. es wird überprüft ob, diese Kontrollpunkte nach Identifizierung einer Auffahrt AUF von dem Fahrzeug durchfahren werden. Hierzu kann die Steuerung STR dazu eingereichtet sein, bei Passieren der Auffahrt die Kontrollpunkte _{"}scharf" zu machen, d. h. erst die Identifikation einer Auffahrt AUF löst in der Steuerung STR die Überwachung des Passierens eines oder mehrerer Kontrollpunkte KOP aus. Die Koordinaten des oder der Kontrollpunkte KOP können ebenfalls in der Speichereinheit SPR abgelegt und werden mit den aktuellen Positionsdaten des Fahrzeugs FAR verglichen.

Ein mautpflichtiger Straßenabschnitt kann als befahren identifiziert werden, wenn die aktuelle Position des Fahrzeuges innerhalb eines Gültigkeitsbereiches GUB eines Kontrollpunktes KOP liegt, oder eine Gerade berechnet aus aktuellen und vorherigen Positionsdaten den Gültigkeitsbereich GUB des Kontrollpunktes KOP schneiden. Um Probleme bei einem temporären Ausfalls des Positionsbestimmungssystems zu vermeiden, ist die Zeitspanne zwischen aktuellen und vorherigen Positionsdaten parametrisierbar. Somit wird das Risiko einer Falschdetektion eines Abschnitts weiter reduziert. Die Sicherheit, mit der das Passieren des Kontrollpunktes KOP erkannt werden kann, lässt sich dadurch erhöhen, dass die Orientierung ORI des Fahrzeuges FAR in einem vorgebbaren Bereich um den Kontrollpunkt KOP innerhalb einer vorgegebenen Toleranz liegt.

Durch die Kombination der Identifizierung einer Auffahrt AUF, die Aktivierung des Kontrollpunktes KOP und die Überwachung des Durchfahrens eines Kontrollpunktes KOP auf der Strecke lässt sich das Befahren eines mautpflichtigen Straßenabschnitts durch das Fahrzeug FAR mit großer Sicherheit feststellen.

## Patentansprüche

1. Verfahren zum Feststellen ob zumindest ein mautpflichtiger Straßenabschnitt durch zumindest ein Fahrzeug (FAR) befahren wird mittels eines Positionsbestimmungssystems, welches dazu eingerichtet ist, die aktuelle Position des zumindest einen Fahrzeuges (FAR) zu erfassen, wobei Positionen des zumindest einen Fahrzeuges (FAR) mit der Position von zumindest einem für eine Auffahrt (AUF) auf einen mautpflichtigen Straßenabschnitt charakteristischen Referenzpunkt verglichen werden, **dadurch gekennzeichnet, dass** innerhalb eines vorgebbaren Bereichs (BER, O) um die Auffahrt (AUF) die Orientierung (ORI) des Fahrzeuges ermittelt wird, wobei festgestellt wird, ob die erhaltene Orientierung (ORI) in einem vorgebbaren Toleranzbereich mit einer für das Auffahren auf den mautpflichtigen Straßenabschnitt charakteristischen Orientierung (ORA) übereinstimmt, wobei vor Ermittlung der Orientierung (ORI) des Fahrzeuges (FAR) überprüft wird, ob die Entfernung des Fahrzeugs (FAR) zu der Auffahrt (AUF) eine vorgebbare Distanz (DIS) unterschreitet, wobei nach Unterschreiten der Distanz (DIS) überprüft wird, ob sich das Fahrzeug (FAR) in dem Bereich (BER, O) um die Auffahrt (AUF) befindet, in welchem die Orientierungsermittlung erfolgt.

2. Verfahren nach Anspruch 1, **dadurch gekennzeichnet, dass** bei Übereinstimmung der ermittelten Orientierung (ORI) des Fahrzeugs (FAR) in dem Bereich (BER, O) um die Auffahrt (AUF) mit der für die Auffahrt (AUF) charakteristischen Orientierung (ORA) innerhalb der Toleranzgrenzen überprüft wird, ob das Fahrzeug (FAR) zumindest einen auf der mautpflichtigen Strecke gelegenen Kontrollpunkt (KOP) passiert.

3. Verfahren nach Anspruch 1 oder 2, **dadurch gekennzeichnet, dass** die von dem Positionsermittlungssystem ermittelten Positionsdaten mit Georeferenzdaten einer elektronischen Landkarte verglichen werden um die Position des Fahrzeuges in Bezug auf die zumindest eine Auffahrt (AUF) und die Orientierung (ORI) des Fahrzeuges (FAR) in dem Bereich (BER, 0) zu ermitteln.

4. Mautsystem (SYS) mit einem Positionsermittlungssystem, welches dazu eingerichtet ist, die momentane Position eines Fahrzeuges (FAR) zu ermitteln, wobei das Fahrzeug (FAR) eine Steuerung aufweist, die dazu eingerichtet ist, Positionen des Fahrzeuge (FAR) mit der Position von für den zumindest einen mautpflichtigen Straßenabschnitt charakteristischen Referenzpunkten zu vergleichen, **dadurch gekennzeichnet, dass** das Mautsystem dazu eingerichtet ist, innerhalb eines vorgebbaren Bereichs (BER, 0) um zumindest eine Auffahrt (AUF) auf einen mautpflichtigen Straßenabschnitt die Orientierung (ORI) des Fahrzeuges (FAR) zu ermitteln, wobei es weiters dazu eingerichtet ist, zu kontrollieren, ob die ermittelte Orientierung (ORI) in einem vorgebbaren Toleranzbereich mit einer für die Auffahrt (AUF) charakteristischen Orientierung (ORA) übereinstimmt, wobei das Mautsystem (SYS) dazu eingerichtet ist, bevor das Fahrzeug in den Bereich (BER, 0) um die Auffahrt (AUF) einfährt zu überprüfen, ob die Entfernung des Fahrzeuges (FAR) zu der Auffahrt (AUF) eine vorgebbare Distanz (DIS) unterschreitet, wobei das Mautsystem (SYS) weiters dazu eingerichtet ist, nach Unterschreiten der Distanz (DIS) zu überprüfen, ob sich das Fahrzeug (FAR) in dem Bereich (BER, 0) um die Auffahrt befindet.

5. Mautsystem nach Anspruch 4, **dadurch gekennzeichnet, dass** es dazu eingerichtet ist, bei Übereinstimmung der ermittelten Orientierung (ORI) des Fahrzeuges (FAR) in dem Bereich (BER, 0) um die Auffahrt (AUF) mit der für die Auffahrt (AUF) charakteristischen Orientierung (ORA) innerhalb der Toleranzgrenzen zu überprüfen, ob das Fahrzeug (FAR) zumindest einen auf der mautpflichtigen Strecke gelegenen Kontrollpunkt (KOP) passiert.

6. Mautsystem nach Anspruch 4 oder 5, **dadurch gekennzeichnet, dass** es dazu eingerichtet ist, die von dem Positionsermittlungssystem ermittelten Positionsdaten mit Georeferenzdaten einer elektronischen Landkarte zu vergleichen, um die Position des Fahrzeuges in Bezug auf die zumindest eine Auffahrt (AUF) und die Orientierung (ORI) des Fahrzeuges (FAR) in dem Bereich (BER, 0) zu ermitteln.

## Claims

1. A method for detecting whether at least one toll road section is being used by at least one vehicle (FAR) by means of a position detection system which is adapted to detect the current position of said at least one vehicle (FAR), wherein positions of said at least one vehicle (FAR) are compared with the position of at least one reference point characteristic of an access point (AUF) on a toll road section, **characterized in that** within a predefined region (BER, 0) surrounding said access point (AUF) the orientation (ORI) of said vehicle is determined, a check being made to determine whether the resulting orientation (ORI) agrees, within a predefined tolerance range, with an orientation (ORA) characteristic of making access to the toll road section, and before said orientation (ORI) of said vehicle (FAR) is determined, a check is made to ascertain whether the distance of said vehicle (FAR) from said access point (AUF) falls short of a predefined distance (DIS) and, after the distance of said vehicle (FAR) falls short of said distance, a check is made to ascertain whether said vehicle (FAR) is located **in that** region (BER, 0) surrounding said access point (AUF) in which the determination of orientation was carried out.

2. A method according to claim 1, **characterized in that** when there is agreement between said determined orientation (ORI) of said vehicle (FAR) in said region (BER, 0) surrounding said access point (AUF) and said orientation (ORA) characteristic of said access point (AUF), within tolerance limits, a check is made to ascertain whether said vehicle (FAR) passes through at least one control point (KOP) located along the road section that is subject to toll.

3. A method according to claim 1 or claim 2, **characterized in that** the positional data determined by the position detection system are compared with georeference data of an electronic map, in order to ascertain the position of said vehicle with reference to said at least one access point (AUF) and the orientation (ORI) of said vehicle (FAR) in said region (BER, 0).

4. A toll-collecting system (SYS) incorporating a position detection system which is adapted to ascertain the current position of a vehicle (FAR), which vehicle (FAR) has control means that are adapted to compare positions of said vehicle (FAR) with the position of reference points characteristic of the at least one toll road section, **characterized in that** said toll-collecting system is adapted to ascertain, within a predefined region (BER, 0) surrounding at least one access point (AUF) on a toll road section, the orientation (ORI) of said vehicle (FAR), and is further adapted to check whether the determined orientation (ORI) agrees, within a predefined tolerance range, with an orientation (ORA) characteristic of said access point (AUF), wherein said toll-collecting system (SYS) is adapted to check, before the vehicle drives into said region (BER, 0) surrounding said access point (AUF), whether the distance of said vehicle (FAR) from said access point (AUF) falls short of a predefined distance (DIS), and said toll-collecting system (SYS) is further adapted to check, after the distance of the vehicle falls short of said distance (DIS), whether said vehicle (FAR) is located in said region (BER, 0) surrounding said access point.

5. A toll-collecting system according to claim 4, **characterized in that** it is adapted to check, when there is agreement of the determined orientation (ORI) of said vehicle (FAR) in said region (BER, 0) surrounding said access point (AUF) with the orientation (ORA) characteristic of said access point (AUF), within the tolerance limits, whether said vehicle (FAR) passes through at least one control point (KOP) located along said road section that is subject to toll.

6. A toll-collecting system according to claim 4 or claim 5, **characterized in that** it is adapted to compare the positional data determined by the position detection system with georeference data of an electronic map, in order to ascertain the position of said vehicle with reference to said at least one access point (AUF) and the orientation (ORI) of said vehicle (FAR) in said region (BER, 0).

## Revendications

1. Procédé permettant de constater si au moins un tronçon de route à péage est emprunté par un véhicule (FAR) au moins au moyen d'un système de détermination de position qui est conçu pour détecter la position actuelle de ce véhicule (FAR) au moins, des positions du véhicule (FAR) au moins étant comparées à la position d'au moins un point de référence caractéristique d'une bretelle d'accès (AUF) sur un tronçon de route à péage, **caractérisé en ce que** l'orientation (ORI) du véhicule est déterminée à l'intérieur d'une zone (BER, 0) pouvant être définie autour de la bretelle d'accès (AUF), moyennant quoi il est constaté si l'orientation (ORI) obtenue concorde, dans une plage de tolérance pouvant être définie, avec une orientation caractéristique (ORA) de la bretelle d'accès sur le tronçon de route à péage, moyennant quoi il est vérifié avant la détermination de l'orientation (ORI) du véhicule (FAR) si la distance entre le véhicule (FAR) et la bretelle d'accès (AUF) est inférieure à une distance (DIS) pouvant être définie (DIS), moyennant quoi il est vérifié, lorsque la distance (DIS) n'est pas atteinte, si le véhicule (FAR) se trouve dans la zone (BER, 0) autour de la bretelle d'accès (AUF), dans laquelle la détermination de l'orientation a lieu.

2. Procédé selon la revendication 1, **caractérisé en ce qu'**en cas de concordance entre l'orientation (ORI) déterminée du véhicule (FAR) dans la zone (BER, 0) autour de la bretelle d'accès (AUF) et l'orientation (ORA) caractéristique de la bretelle d'accès (AUF), on vérifie dans les limites de tolérance si le véhicule (FAR) franchit au moins un point de contrôle (KOP) situé sur le tronçon à péage.

3. Procédé selon la revendication 1 ou 2, **caractérisé en ce que** les données de position déterminées par le système de détermination de position sont comparées à des données de référence géographiques d'une carte électronique, afin de déterminer la position du véhicule par rapport à la bretelle d'accès (AUF) au moins et l'orientation (ORI) du véhicule (FAR) dans la zone (BER, 0).

4. Système de péage (SYS) avec un système de détermination de position qui est conçu pour déterminer la position momentanée d'un véhicule (FAR), le véhicule (FAR) présentant une commande conçue pour comparer des positions du véhicule (FAR) à la position de points de référence caractéristiques du tronçon de route à péage au moins, **caractérisé en ce que** le système de péage est conçu pour déterminer l'orientation (ORI) du véhicule (FAR) à l'intérieur d'une zone (BER, 0) pouvant être définie autour d'au moins une bretelle d'accès (AUF) sur un tronçon de route à péage, le système étant également conçu pour vérifier si l'orientation déterminée (ORI) concorde, dans une plage de tolérance pouvant être définie, avec une orientation caractéristique (ORA) de la bretelle d'accès (AUF), le système de péage (SYS) étant conçu pour vérifier si la distance entre le véhicule (FAR) et la bretelle d'accès (AUF) est inférieure à une distance pouvant être définie (DIS) avant que le véhicule n'entre dans la zone (BER, 0) autour de la bretelle d'accès (AUF), le système de péage (SYS) étant en outre conçu pour vérifier, lorsque la distance (DIS) n'est pas atteinte, si le véhicule (FAR) se trouve dans la zone (BER, 0) autour de la bretelle d'accès.

5. Système de péage selon la revendication 4, **caractérisé en ce qu'**il est conçu pour vérifier, à l'intérieur des limites de tolérance,si le véhicule (FAR) franchit au moins un point de contrôle (KOP) situé sur le parcours soumis à un péage en cas de concordance entre l'orientation déterminée (ORI) du véhicule (FAR) dans la zone (BER, 0) autour de la bretelle d'accès (AUF) et l'orientation caractéristique (ORA) de la bretelle d'accès (AUF).

6. Système de péage selon la revendication 4 ou 5, **caractérisé en ce qu'**il est conçu pour comparer les données de position déterminées par le système de détermination de position à des données de référence géographiques d'une carte électronique, afin de déterminer la position du véhicule par rapport à la bretelle d'accès (AUF) au moins et l'orientation (ORI) du véhicule (FAR) dans la zone (BER, 0).
